# EUROPEAN PATENT APPLICATION

(11) **EP 4 826 567 A1**
(43) Date of publication of application: **21.10.2026**
(21) Application number: 25192740.6
(22) Date of filing: 30.07.2025
(51) Int. Cl.: G06F 16/735, G06F 16/783

(54) **IDENTIFYING SOURCE FILES OF MEDIA CONTENT**

(30) Priority: 18.04.2025 US 202563791116 P
(71) Applicant: Dolby Laboratories Licensing Corporation, San Francisco, CA 94103 (US)
(72) Inventor: LAKSHMINARAYANAN, Gopi, San Francisco, CA 94103 (US); MARY MAMMEN, Priyanka, San Francisco, CA 94103 (US); NGUYEH, Justin, San Francisco, CA 94103 (US); RAMAKRISHNA, Bhavya, San Francisco, CA 94103 (US)
(74) Representative: Dolby International AB Patent Group Europe

(57) **Abstract**

Methods, systems, and media for identifying source files are provided. **In** some embodiments, a method for identifying source files may involve receiving a target file. The method may further involve identifying, from a set of candidate source files, a subset of candidate source files by filtering the set of candidate source files based on metadata associated with each candidate source file. The method may further involve identifying a matching source file of the subset of candidate source files based on similarities of embeddings of candidate source files of the subset of candidate source files to embeddings associated with the target file.

## Description

### CROSS-REFERENCE TO RELATED APPLICATIONS

This application claims the benefit of priority from U.S. Provisional Application No. 63/791,116, filed on 18 April 2025, which is incorporated by reference herein in its entirety.

### TECHNICAL FIELD

This disclosure pertains to systems, methods, and media for identifying source files of media content.

### BACKGROUND

Premium content, such as professionally-developed movies, television shows, etc., involve complex production processes with multiple stages, which may involve pre-production, introduction, and post-production. During each stage, various assets, such as scripts, storyboards, audio, video, images, animations, and/or visual effects may be created and/or combined to produce the final content. The assets may additionally include documents, such as scripts, storyboards, concept art, set design, etc. The assets may have been created by many different sources, and each source may archive assets differently. The assets may include rich metadata which may provide valuable insight into professional content creation, and utilizing this metadata, and hence, the insights, may allow for easier content creation of other premium content. However, it can be difficult to identify the assets associated with premium content. For example, the assets may be stored in archives or directories of enormous size (e.g., greater than 100 Terabytes), and may be modified over time, which makes searching for the assets using conventional techniques a difficult if not impossible challenge.

### NOTATION AND NOMENCLATURE

Throughout this disclosure, including in the claims, the expression performing an operation "on" a signal or data (e.g., filtering, scaling, transforming, or applying gain to, the signal or data) is used in a broad sense to denote performing the operation directly on the signal or data, or on a processed version of the signal or data (e.g., on a version of the signal that has undergone preliminary filtering or pre-processing prior to performance of the operation thereon).

Throughout this disclosure including in the claims, the expression "system" is used in a broad sense to denote a device, system, or subsystem. For example, a subsystem that implements a decoder may be referred to as a decoder system, and a system including such a subsystem (e.g., a system that generates X output signals in response to multiple inputs, in which the subsystem generates M of the inputs and the other X - M inputs are received from an external source) may also be referred to as a decoder system.

Throughout this disclosure including in the claims, the term "processor" is used in a broad sense to denote a system or device programmable or otherwise configurable (e.g., with software or firmware) to perform operations on data (e.g., audio, or video or other image data). Examples of processors include a field-programmable gate array (or other configurable integrated circuit or chip set), a digital signal processor programmed and/or otherwise configured to perform pipelined processing on audio or other sound data, a programmable general purpose processor or computer, and a programmable microprocessor chip or chip set.

### SUMMARY

Methods, systems, and media for identifying source files are provided. According to some embodiments, a method for identifying source files may involve receiving a target file. The method may further involve identifying, from a set of candidate source files, a subset of candidate source files by filtering the set of candidate source files based on metadata associated with each candidate source file. The method may further involve identifying a matching source file of the subset of candidate source files based on similarities of embeddings of candidate source files of the subset of candidate source files to embeddings associated with the target file.

In some examples, the metadata associated with each candidate source file is stored in an edit decision list (EDL) file.

In some examples, the target file has a size of at least 30 GB.

In some examples, identifying the matching source file of the subset of candidate source files comprises performing a hierarchical sequence of similarity comparisons between the target file and each candidate source file in the subset. In some examples, the target file comprises a video file, and the hierarchical sequence comprises: determining similarities between video components of the target file and video components associated with each candidate source file in the subset; and responsive to determining each similarity of video components is below a video similarity threshold, determining similarities between audio components of the target file and audio components associated with each candidate source file. In some examples, the method further involves responsive to determining each similarity of audio components is below an audio similarity threshold, determining similarities between text components of the target multimedia file and text components associated with each candidate source file. In some examples, the text components comprise captions or subtitles.

In some examples, the subset of candidate source files is a first stage subset of candidate source files, and identifying the matching source file comprises: determining a target embedding associated with the target file; determining a target hash code associated with the target embedding; and identifying a second stage subset of candidate source files, the second stage subset of candidate source files being a subset of the first stage subset of candidate source files, based on a comparison of the target hash code to hash codes associated with each of the candidate source files of the first stage subset of candidate source files, wherein the matching source file is identified from the second stage subset of candidate source files. In some examples, the matching source file is identified by comparing embeddings associated with candidate source files of the second stage subset of candidate source files and the target embedding. In some examples, the target hash code and each of the hash codes associated with each of the candidate source files of the first stage subset of candidate source files are associated with an uncertainty, and wherein the uncertainty of each hash code is used in identifying the second stage subset of candidate source files. In some examples, wherein the target hash code is generated using a trained neural network configured to take, as input, the target embedding, and generate, as output, the target hash code. In some examples, the neural network is further configured to take, as input, an uncertainty associated with the target embedding, and utilize the uncertainty to generate the target hash code. In some examples, the neural network is trained in a supervised manner using a training set comprising pairs of embeddings including similar pairs and dissimilar pairs.

In some examples, the embeddings associated with each of the candidate source files and with the target multimedia file are each associated with an uncertainty, and the uncertainty of each embedding is utilized in comparing the embeddings to identify the matching source file.

At least some aspects of the present disclosure may be implemented via an apparatus. For example, one or more devices may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 is a block diagram of an example system for identifying source files in accordance with some embodiments.
Figure 2 is a flowchart of an example process for identifying source files in accordance with some embodiments.
Figure 3 is a flowchart of an example process for determining similarities between two files in accordance with some embodiments.
Figure 4A is a block diagram of an example system for using embeddings and hash codes to identify source files in accordance with some embodiments.
Figure 4B is a flowchart of an example process for using embeddings and hash codes to identify source files in accordance with some embodiments.
Figure 5A shows a block diagram that illustrates examples of components of an apparatus capable of implementing various aspects of this disclosure.
Figure 5B illustrates a schematic block diagram of an example device architecture that may be used to implement various aspects of the present disclosure.
Figure 5C illustrates a schematic block diagram of an example CPU implemented in the device architecture of Figure 5B that may be used to implement various aspects of the present disclosure.

Like reference numbers and designations in the various drawings indicate like elements.

### DETAILED DESCRIPTION OF EMBODIMENTS

Premium content, such as professionally-developed movies, television shows, etc., involve complex production processes with multiple stages, which may involve pre-production, introduction, and post-production. During each stage, various assets, such as scripts, storyboards, audio, video, images, animations, and/or visual effects may be created and/or combined to produce the final content. The assets may additionally include documents, such as scripts, storyboards, concept art, set design, etc. The assets may have been created by many different sources, and each source may archive assets differently. The assets may include rich metadata which may provide valuable insight into professional content creation, and utilizing this metadata, and hence, the insights, may allow for easier content creation of other premium content. However, it can be difficult to identify the assets associated with premium content. For example, the assets may be stored in archives or directories of enormous size (e.g., greater than 100 Terabytes), and may be modified over time, which makes searching for the assets using conventional techniques a difficult if not impossible challenge.

Disclosed herein are techniques for identifying assets associated with premium content. The assets are generally referred to herein as "source files," and may include audio content, video content, image content, text content, etc. used to generate a premium content file, which is generally referred to herein as "a target file." The techniques disclosed herein may receive a target file, generate segmented clips of the target file, and use metadata associated with the target file to generate a subset of candidate source files (e.g., candidate assets used to create the target file) by filtering a larger superset of candidate source files based on the metadata. The metadata may be, e.g., an edit decision list (EDL). After constructing a smaller subset of candidate source files, matching source files may be identified using machine learning. In particular, embeddings associated with the target file may be compared to embeddings associated with candidate source files in the subset to identify the matching source files, where the embeddings are generated with a pre-trained encoder network. The encoder network may be configured to translate higher-dimensional components (e.g., a video component of the target file, an audio component of the target file, a text component of the target file, etc.) to a lower-dimensional space that encodes, e.g., semantic context. Note that, as used herein, "a pre-trained encoder network" refers to an encoder network that has already been trained to generate embeddings for a given content type. The encoder network may have been trained by an entity other than an entity associated with the target file (e.g., the premium content), or other than an entity storing any of the assets or source files.

In some implementations, identification of matching source files from the subset of candidate source files may be performed in a hierarchical manner. For example, given a target file (e.g., a movie, a television show, etc.) containing a video component and an audio component, similarity between the target file and candidate source files may be evaluated first for the video component. If no likely matching source files are identified with confidence exceeding a threshold, or, if two candidate source files have the same (or are within a predetermined range) similarity values as each other, similarity may then be assessed based on the audio components. In some cases, if no likely matching source files are identified with confidence exceeding a threshold based on the audio component, or if two candidate source files have the same (or are within a predetermined range) similarity values as each other with respect to the audio component, text components (e.g., captions, etc.) may be considered. In this manner, source files may be more quickly identified (e.g., by prioritizing components more likely to generate a match), while preserving match accuracy.

In some implementations, identification of matching source files may utilize a hash code generated based on an embedding. In particular, while an embedding is a lower-dimensional representation compared to a video component or an audio component, an embedding itself may be relatively large, and accordingly, identifying matching source files based on embeddings may be computationally intensive. Disclosed herein are techniques for generating a hash code from an embedding. In particular, in some embodiments, the subset of candidate source files filtered based on metadata may be considered a first stage subset of candidate source files. A second stage subset of candidate source files may then be identified by comparing hash codes associated with the target file with hash codes of candidate source files in the first stage subset of candidate source files (e.g., using Hamming distances between the hash codes to identify the second stage subset). Embeddings may then be used to identify matching source files based on the second stage subset. This progressive filtering of the candidate source files, first based on the metadata, then subsequently based on the hash codes, may allow for computationally efficient identification (by utilizing metadata then hash codes to progressively identify subsets of the larger superset of candidate source files), while preserving accuracy in source file identification (by using embeddings for the final identification of the matching source files).

It should be understood that, as used herein, a "file," (such as a target file, a source file, etc.) may refer to a single file, or to a set or sequence of files that are linked or otherwise associated with one another. Additionally, it should be understood that the techniques disclosed herein may be particularly advantageous for target files that are relatively larger, e.g., greater than 30 Gigabytes (GB), greater than 50 GB, greater than 70 GB, etc. However, the techniques may also be used on smaller files.

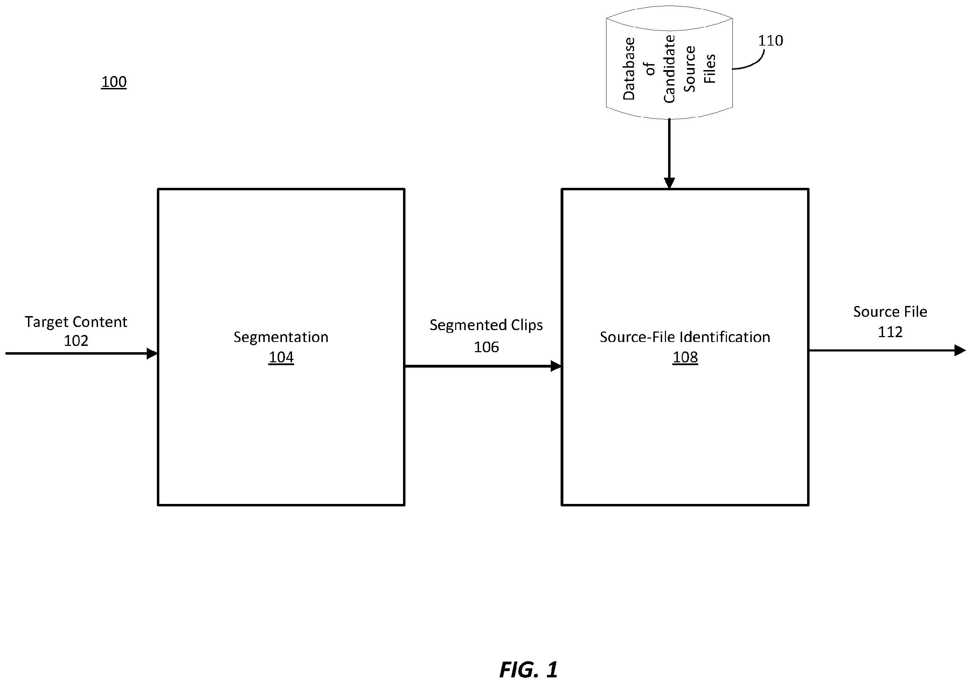

Figure 1 is a block diagram of an example system 100 for identifying source files in accordance with some embodiments. As illustrated, system 100 may include a segmentation block 104. Segmentation block 104 is configured to receive, as input, target content 102. Target content 102 may be any suitable type of content, such as video content, video content with corresponding audio content, audio content, video content and/or audio content with corresponding text content (e.g., captions, lyrics, etc.), or the like. For example, target content 102 may be a multi-media file that is, e.g., a movie, a television show, a news broadcast, etc. Target content 102 may be content for which one or more matching source files are to be identified by system 100. In some implementations, target content 102 may be associated with metadata associated with each source file. For example, the metadata may be specified in an edit decision list (EDL) file. The metadata may specify timestamps at which various events occur within target content 102, e.g., a cut from a first scene to a second scene, an onset of particular audio content, etc. In some implementations, segmentation block 104 may perform segmentation based on the metadata. For example, segmentation block 104 may utilize the metadata to segment target content 102 into a set of segmented clips 106 based on the metadata.

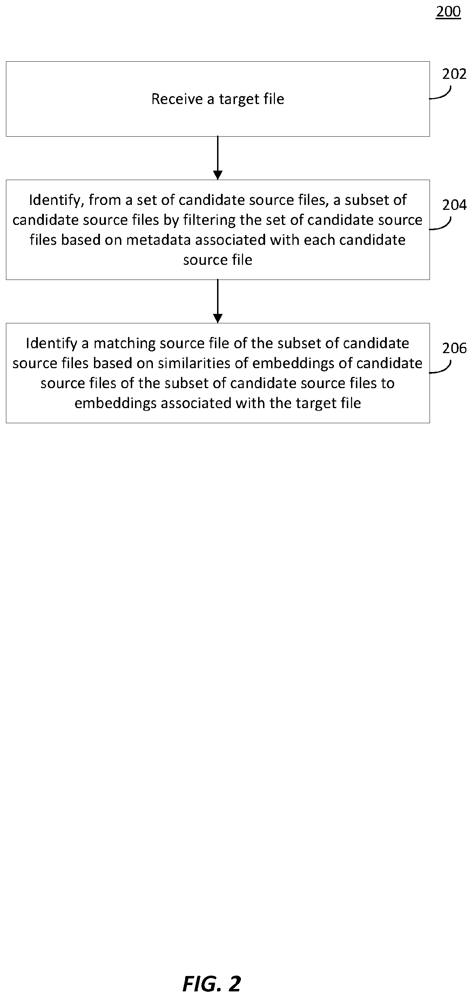

Segmented clips 106 may be provided as input to source-file identification block 108. Source-file identification block 108 is configured to utilize candidate source files (e.g., stored in a database of candidate source files 110) to identify a matching source file 112 corresponding to target content 102 based on segmented clips 106. In some implementations, source-file identification block 108 may be configured to generate a first stage subset of candidate source files (e.g., from the database of candidate source files 110) based on the metadata(e.g., an edit decision list (EDL) associated with target content 102. Source file identification block 108 may then identify, from the first stage subset of candidate source files, the matching source file 112 based on embeddings of candidate source files in the first stage subset and embeddings associated with target content 102 (and/or segmented clips 106), as described below in connection with Figure 2.

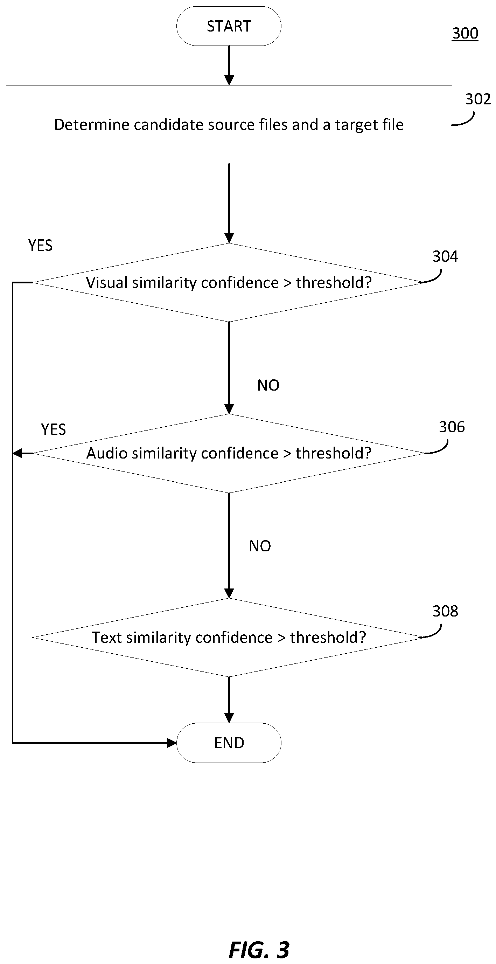

In some implementations, as described below in connection with Figure 3, source-file identification block 108 may utilize a hierarchical similarity search to identify matching source file 112. For example, if target content 102 is video content (e.g., a movie, a television show, etc.), source-file identification block 108 may first search for a candidate source file from the first stage subset having a similarity to target content 102 that exceeds a threshold based on a video component. If the confidence in such similarity scores does not exceed the threshold, audio component similarity may be assessed. Continuing with this example, if the audio component similarity confidence does not exceed a threshold, text component similarity may be assessed. In this manner, and as described below in more detail in connection with Figure 3, similarity may be assessed hierarchically, with audio components and/or text components assessed when a source file cannot confidently be identified based on video components alone. For example, audio components and/or text components may be assessed responsive to determining that multiple candidate source files may be a match, e.g., based on similar video component similarity scores.

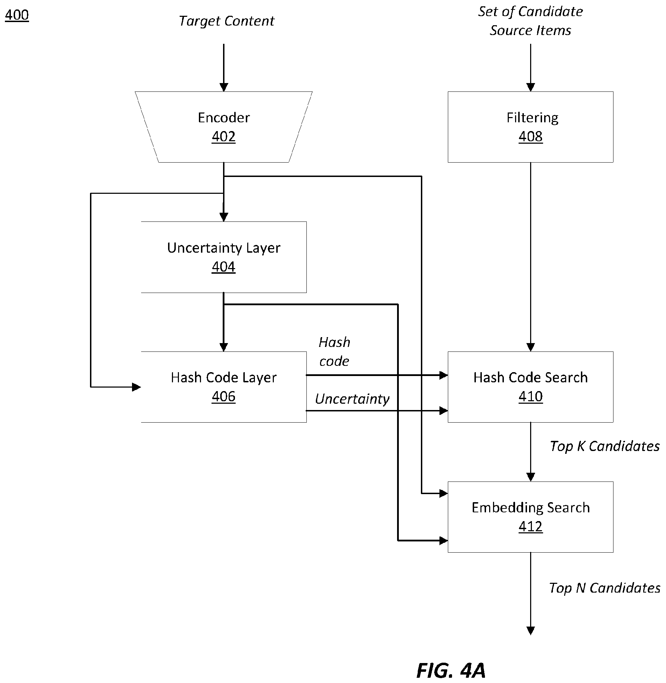

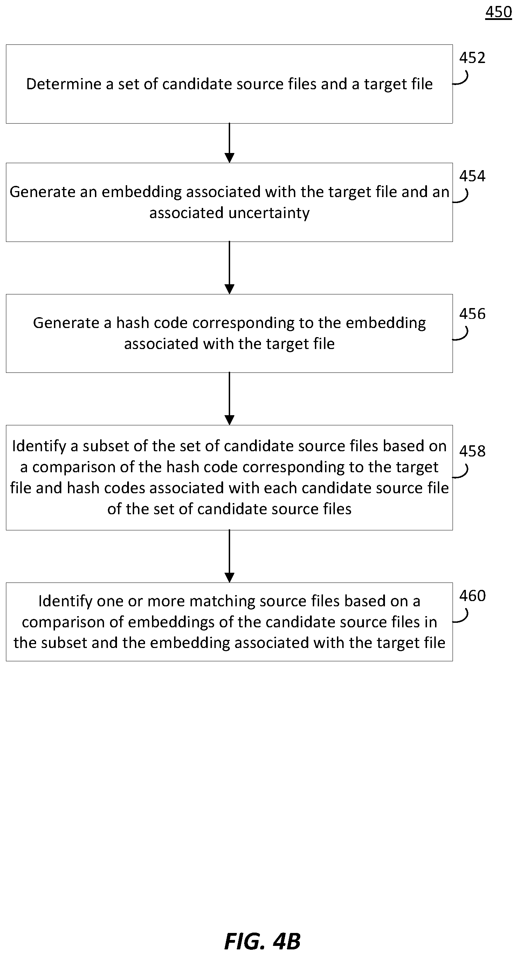

In some implementations, as discussed below in connection with Figures 4A and 4B, hash codes may be used to enable faster identification of source files. In particular, a target content item (e.g., a segmented clip of segmented clips 106) may be passed through a pre-trained encoder to generate an embedding. This embedding may then be hashed to generate a hash code. Source-file identification block 108 may utilize the hash code associated with the target content to identify matching source file 112 by comparing the hash code associated with the target content to pre-generated hash codes associated with candidate source files. In some embodiments, and as described below in connection with Figures 4A and 4B, the hash codes may be used to generate a second stage subset of candidate source files, which is a subset of the first stage subset of source files. The matching source file 112 may be identified from the second stage subset of candidate source files by comparing embeddings associated with the target content with embeddings associated with candidate source files in the second stage subset. Note that, while Figure 1 shows one matching source file 112 as an output of source-file identification block 108, in some implementations, a ranked list of candidate matches may be provided. The list may be ranked in order of likelihood to be a match, which may assist a user in a manual inspection.

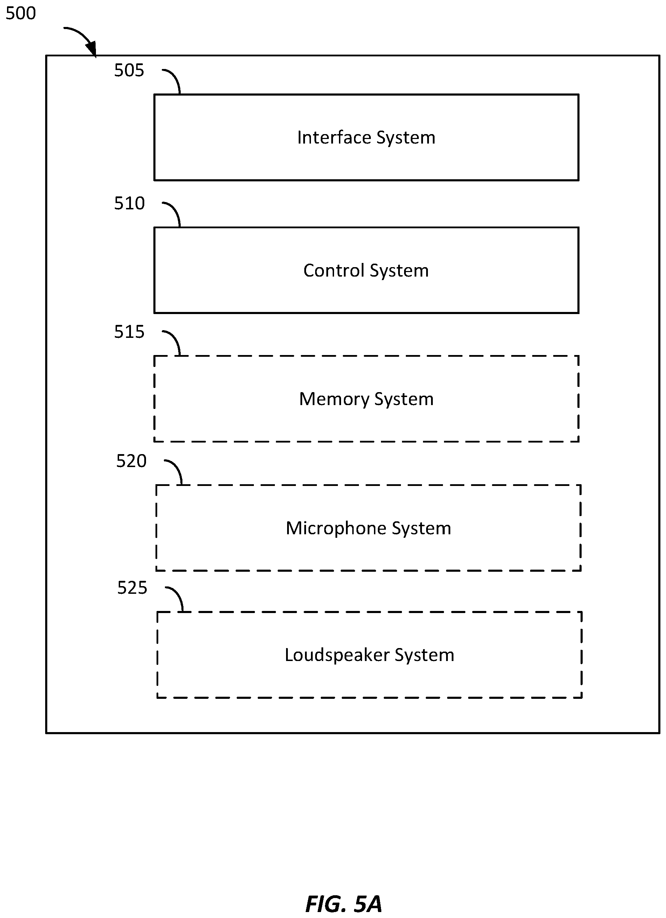

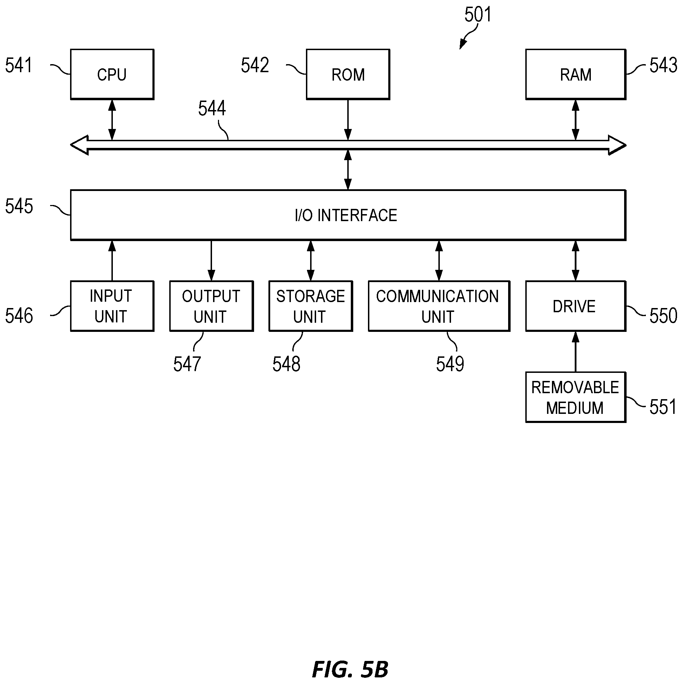

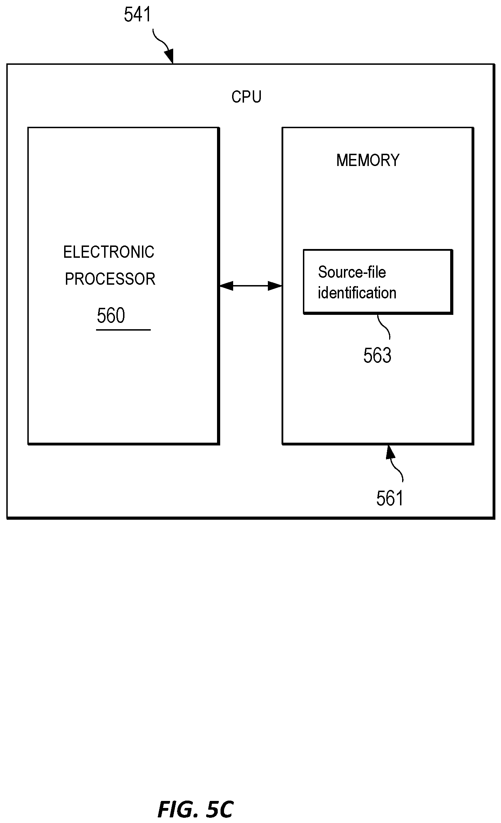

Figure 2 is a flowchart of an example process 200 for identifying a matching source file corresponding to a target file in accordance with some embodiments. For example, process 200 may be performed by source-file identification block 108 as shown in and described above in connection with Figure 1. In some embodiments, blocks of process 200 may be executed by one or more processors and/or control systems of one or more computing devices (e.g., a laptop computer, a desktop computer, a server, etc.). Examples of such computing devices and components of such computing devices are shown in and described below in connection with Figures 5A, 5B, and 5C. In some embodiments, blocks of process 200 may be executed in an order other than what is shown in Figure 2. In some implementations, one or more blocks of process 200 may be omitted. In some implementations, two or more blocks of process 200 may be performed in parallel.

Process 200 can begin at 202 by receiving a target file. The target file may be a media content file that includes video content, audio content, and/or text content. In one example, the target file may be a multimedia content file that includes video content, and corresponding audio content and text content (e.g., captions). In another example, the target file may be an audio content file (e.g., music). In some cases, the target file received at 202 may be a segmented clip (e.g., a segmented clip from segmented clips 106) from a larger target file. For example, in such cases, the target file may be an output of segmentation block 104 of Figure 1.

At 204, process 200 can identify, from a set of candidate source files, a subset of candidate source files by filtering the set of candidate source files based on metadata associated with each candidate source file. The set of candidate source files may be stored in a database, such as database 110 of Figure 1. The metadata associated with each candidate source file may include reel and timing information, e.g., to provide a mapping from original source files to the final content file. Each event stored in the metadata may be associated with a transition type (e.g., cut, dissolve, clip, etc.), a transition duration, source reel name, and/or channel type. In one example, the metadata may be an EDL file.

Filtering the set of candidate source files based on the metadata may involve using reel name information and/or timing information to identify, from the set of candidate source files, the subset of candidate source files that are plausible matches to the target file.

Note that it is difficult to utilize the metadata (e.g., an EDL) to directly and/or conclusively identify matching source files, because multiple video and audio tracks may be combined together, multiple edits may be applied simultaneously, etc. These changes may cause the final target file to differ substantially from the source files, causing difficulty in identifying source files directly from the metadata. Because it is difficult to accurately identify source files directly from metadata, process 200 can utilize machine learning to identify matching source file(s) from the subset, as described below at block 206.

At 206, process 200 can identify a matching source file of the subset of candidate source files based on similarities of embeddings of candidate source files of the subset of candidate source files to embeddings associated with the target file. In particular, an embedding associated with the target file may be generated by providing the target file to a trained encoder machine learning model configured to output the embedding. Similarly, each of the candidate source files may be stored in connection with a pre-generated embedding (e.g., in database 110 of Figure 1). In general, an embedding is a representation of high-dimensional data (e.g., audio data, video data, etc.) to a low-dimensional space. An embedding may encode semantic content, e.g., of the associated file, in a low-dimensional space. Accordingly, comparing embeddings may allow similarities between two files to be determined in a relatively low-dimensional space.

In some implementations, identifying the matching source file based on similarities of embeddings may be performed in a hierarchical manner. For example, given a target content item that includes video components and audio components, visual similarity may be assessed first, e.g., by comparing video component embeddings. If there are multiple candidate source files that exceed a visual similarity threshold with similarities that are the same or are similar to each other (e.g., within a predetermined range, such as +/- 5%*,* +/- 10%, etc.), audio similarity may be assessed using the audio components associated with the target content item and corresponding audio content for candidate source files. In other words, visual similarity may be assessed to identify one or more likely source files, and, audio component similarity can be assessed to disambiguate between multiple candidate source files. In some embodiments, if there are multiple candidate source files that exceed an audio similarity threshold with similarities that are the same or are similar to each other, text similarity may be assessed using text components (e.g., captions, etc.). For identifying source files for target audio content, the hierarchical search may first utilize audio similarities, followed by text similarity, if text components exists. This hierarchical similarity search may allow source files to be more quickly identified while also having high accuracy by prioritizing similarities likely to provide the most information, and only using other types of content to address ambiguities. In general, the hierarchical search presumes that files will be dissimilar to each other in at least one modality (e.g., video, audio, or text), with more informative modalities searched prior to less informative modalities.

Figure 3 is a flowchart of an example process 300 for performing a hierarchical search to identify a source file in accordance with some embodiments. For example, process 300 may be performed as part of block 206 of Figure 2. In some embodiments, blocks of process 300 may be executed by one or more processors and/or control systems of one or more computing devices (e.g., a laptop computer, a desktop computer, a server, etc.). Examples of such computing devices and components of such computing devices are shown in and described below in connection with Figures 5A, 5B, and 5C. In some embodiments, blocks of process 300 may be executed in an order other than what is shown in Figure 3. In some implementations, one or more blocks of process 300 may be omitted. In some implementations, two or more blocks of process 300 may be performed in parallel.

Process 300 can start at 302 by determining candidate source files and at a target file. For example, the target file may be a segment of a target file, or the file as a whole. The candidate source files may be the subset of candidate source files, e.g., identified as described above in connection with block 204 of Figure 2 by filtering a set of candidate source files based on metadata.

At 304, process 300 can determine whether any of the candidate source files identified at block 302 have a visual similarity that exceeds a visual similarity threshold. The visual similarity of each candidate source file to the target file may be determined based on embeddings associated with each. As described above in connection with block 206 of Figure 2, the embeddings may be generated by a pre-trained encoder network. For example, embeddings of a candidate source file may be compared to embeddings of the target file to determine whether the similarity exceeds a threshold. Note that, in some implementations, similarity may be assessed by first comparing hash codes of the candidate source files to shortlist the candidate source files, and then embeddings may be compared for the shortlisted candidate source files, as discussed below in connection with Figures 4A and 4B.

If, at 304, process 300 identifies one or more candidate source files with visual similarity confidence exceeding a threshold ("yes" at 304), process 300 can end. Conversely, if, at 304, process 300 does not identify one or more candidate source files with visual similarity confidence exceeding a threshold ("no" at 304), process 300 can proceed to 306 and can determine whether any of the candidate source files have an audio similarity confidence that exceeds an audio similarity threshold. Similar to what is described above in connection with block 304, audio similarity may be assessed based on hash codes and/or embeddings. A technique for utilizing hash codes to generate a shortlist prior to using embeddings for comparison is shown in and described below in connection with Figure 4A and 4B.

If, at 306, process 300 identifies one or more candidate source files with audio similarity confidence exceeding a threshold ("yes" at 306), process 300 can end. Conversely, if, at 306, process 300 does not identify one or more candidate source files with visual similarity confidence exceeding a threshold ("no" at 306), process 300 can proceed to 308 and can determine whether any of the candidate source files have a text similarity confidence that exceeds a text similarity threshold. Similar to what is described above in connection with blocks 304 and 306, text similarity may be assessed based on hash codes and/or embeddings. A technique for utilizing hash codes to generate a shortlist prior to using embeddings for comparison is shown in and described below in connection with Figure 4A and 4B.

Note that, after 308, either one or more matching source files are identified, and process 300 can end. Note that, in some instances, a matching source file may not be identified with high confidence. In such cases, in some embodiments, a ranked list of candidate source files may be presented, which may assist a user in manual inspection of the candidate source files. The list may be generated and/or ranked based on similarity scores.

Additionally, note that Figure 3 illustrates a process for a hierarchical search for matching source files for a target content item that includes video components, audio components, and text components. In instances where the target content item does not include a particular type of component (e.g., video, audio, or text), similarity based on that type of component may be omitted. For example, for a target content item that includes only audio components and text components, block 304 may be omitted. As another example, for a target content item that includes only video components and audio components (and no text components), block 308 may be omitted.

As discussed above, in some implementations, hash codes may be generated for embeddings generated from a pre-trained encoder network. In general, a hash code is a binary representation, in this case, a binary representation of the embedding. Because the hash code is a binary representation, the hash code may be less computationally intensive to utilize than the embedding, e.g., to compare a target content item with a candidate source item. In some implementations, hash codes may be used to effectively shortlist a set of candidate source items to form a subset of the candidate source items. The subset of candidate source items may then be processed using the embeddings to identify matching source files. In other words, in some embodiments, hash codes may be used to quickly (e.g., computationally efficiently) identify a set of candidate source items that are likely to include a matching source file (and conversely, to exclude candidate source files, e.g., from a broader database or broader set, that are not likely to match). Embeddings may then be used to accurately identify one or more matches from the subset generated using hash codes.

In some embodiments, metadata (e.g., an EDL) may be used to generate a first stage subset of candidate source items. Continuing with this example, hash codes may then be used to generate a second stage subset of candidate source items. Continuing still further with this example, embeddings may be used to identify one or more matching source items from the second stage subset. This pipeline may allow quick yet accurate identification of matching source items.

Figure 4A is a block diagram of an example implementation of a system 400 for using hash codes to generate a subset of candidate source files in accordance with some embodiments. Note that system 400 is one example implementation of a similarity-checking block (e.g., any of blocks 304, 306, and/or 308 of Figure 3). It should be noted that in instances in which system 400 is utilized as an implementation of a similarity-checking block, various components of system 400 (e.g., uncertainty layer 404 and/or hash code layer 406, which will be explained further below) may be trained separately and have different instances based on the separate training for each component type (e.g., video components, audio components, and/or text components).

System 400 includes an encoder 402. Encoder 402 is a pre-trained encoder network configured to take, as input, a content item, and generate, as an output, an embedding. As discussed above, the embedding is a lower-dimensional representation of features of the input content item which may, for example, encode semantic context of the content item or other features of the content item. In system 400, encoder 402 takes as input a target content item and generates an embedding associated with the target content item. It should be noted that a separate encoder may be used for each component type of a target content item, such as a first encoder that generates embeddings for video components of the target content item or file, a second encoder that generates embeddings for audio components of the target content item or file, and a third encoder that generates embeddings for text components of the target content item or file.

Uncertainty layer 404 is configured to receive, as input, the embedding associated with the target content item (and in particular, for a particular type of component of the target content item), and generate an uncertainty associated with the embedding. Because the embedding represents a higher-dimensional item (e.g., the target content item, which may include video content, audio content, or text content) in a lower-dimensional representation, there is loss associated with generating the embedding. Uncertainty layer 404 is configured to generate an uncertainty associated with the embedding due to noise or the loss of information in representing a higher-dimensional item in a lower-dimensional representation. The uncertainty is generally considered an aleatoric uncertainty, which generally refers to statistical uncertainty, or randomness in data that cannot be explained. Uncertainty layer 404 may comprise a trained neural network or other machine learning model architecture. The neural network or other machine learning model architecture may be trained using contrastive learning techniques.

Hash code layer 406 is configured to receive, as input, the embedding associated with the target item (e.g., as generated by encoder 402) and the uncertainty generated by uncertainty layer 404, and generate, as an output, a hash code and an uncertainty associated with the hash code. Similar to the uncertainty generated by uncertainty layer 404, the uncertainty generated by hash code layer 406 is an aleatoric uncertainty arising due to loss in information from translating the embedding to the binary format of the hash code.

Hash code layer 406 may be trained using a contrastive learning approach. In contrastive learning, a model is trained to distinguish between similar and dissimilar data points by maximizing the similarity between similar pairs and by minimizing the similarity between dissimilar pairs. In one example, hash code layer 406 may be trained using a training set, where each training sample includes a pair of content items (which may be *a priori* known to be similar or dissimilar from each other), embeddings from a pre-trained encoder network, and uncertainty values for each embedding. Weights may be computed to balance dissimilar pairs in the hash code training data. In one implementation, a weight *wᵢⱼ* for a pair of items *i* and *j* in one training sample may be determined by: ${w}_{ij} = log \left(\frac{{N}_{similar} + {N}_{dissimilar}}{{s}_{ij} {N}_{similar} + \left(1-{s}_{ij}\right) {N}_{dissimilar}}\right.$

In the equation given above, *Nₛᵢₘᵢₗₐᵣ* and *N_{dissimilar}* represent the number of similar pairs and the number of dissimilar pairs, respectively, in the training set. In the equation given above, *sᵢⱼ* represents the similarity value of the pair *ij,* which may be either 1 for similar pairs, or 0 for dissimilar pairs.

In some implementations, the weights may account for the uncertainties associated with the embeddings. For example, *σᵢ* represents the uncertainty associated with the embedding for item *i* in a training sample pair, and *σⱼ* represents the uncertainty associated with the embedding for item *j* in the training sample pair. The weights may be modified by multiplying *wᵢⱼ* by *e^{(σᵢ+σⱼ)}.*

Given hash code values of *cᵢ* and *cⱼ* determined based on the embeddings for items *i* and *j*, respectively, a pairwise loss function between the hash codes may be represented as: ${L}_{p} = {\sum }_{{s}_{ij}} {w}_{ij} \left(log\left(1+{e}^{α}{c}_{i}^{T} {c}_{j}\right)-{αs}_{ij}{c}_{i}^{T} {c}_{j}\right)$

The final training objective, the contrastive loss function, may be represented by: $\frac{1}{2} {SL}_{p} + \frac{1}{2} \left(1-S\right) max \left(0,p-{L}_{p}\right)$

In the equation given above, S represents a semantic similarity matrix, where values in the matrix may be binary values (e.g., 0 and 1) indicating the relationship between similar and dissimilar items. During training of the hash layer, the contrastive loss function may be used to iteratively update the weights, e.g., using gradient descent. Once a stop criterion is reached, hash code layer 406 may be considered trained and may be used at inference time to generate a hash code and an associated uncertainty based on an embedding.

Note that, as described above, hash code layer 406 utilizes a data-dependent method that utilizes embeddings to train a neural network to generate the hash code. Moreover, the techniques described above utilize a supervised approach to train hash code layer 406. Alternatively, in instances in which a data-dependent method is used, an unsupervised or semi-supervised approach may be taken to generate data-dependent hash codes.

Accordingly, via encoder 402, uncertainty layer 404, and hash code layer 406, an embedding, an uncertainty associated with the embedding, a hash code associated with the embedding, and an uncertainty associated with the hash code, have been generated for the target content item.

Filtering block 408 may take, as input, a set of candidate source items. The set may correspond to, e.g., the candidate source items in database 110 of Figure 1. Filtering block 108 may use metadata to filter the set of candidate source items to generate a first stage subset of candidate source items using the metadata (e.g., as described above in connection with block 204 of Figure 2). For example, metadata associated with the target file (e.g., from an EDL) may indicate timestamp information associated with edits of the target file. This timestamp information may be used to filter (by filtering block 408) the candidate source items by identifying source items of the candidate source items with edit timing information generally corresponding to the timestamp information indicated in the metadata of the target file.

Note that each candidate source item in the set of candidate source items may be stored in connection with an associated embedding, uncertainty associated with the embedding, hash code associated with the embedding, and uncertainty associated with the hash code. Each of these may be pre-computed, e.g., using an instance of encoder 402.

The first stage subset of candidate source items may be provided to hash code search block 410. Hash code search block 410 may utilize the hash code associated with the target content item and the associated uncertainty, as well as the hash codes associated with candidate source items in the first stage subset and their associated uncertainties, to generate a second stage subset of candidate source items (referring to in Figure 4A as the "top K candidates," where K may be one, two, five, twenty, one hundred, etc.). For example, hash code search block 410 may use Hamming distances between hash codes to generate the second stage subset.

The second stage subset of candidate source items may be provided to embedding search block 412. Embedding search block 412 may utilize the embedding associated with the target content item and the associated uncertainty, as well as the embeddings and associated uncertainties for candidate source items in the second stage subset of candidate source items to identify one or more matching source items, referred to in Figure 4A as the "top N candidates." Embedding search block 412 may utilize a distance metric between uncertainties associated with the candidate source items to identify a match. Example distance metrics include a Euclidean distance, a cosine similarity, etc. The associated uncertainties may be utilized as a confidence metric where a higher uncertainty corresponds to a lower confidence, and vice versa.

Figure 4B is a flowchart of an example process 450 for utilizing hash codes and embeddings to identifying matching source files in accordance with some embodiments. For example, process 450 may be performed by system 400 of Figure 4A. In some embodiments, blocks of process 450 may be executed by one or more processors and/or control systems of one or more computing devices (e.g., a laptop computer, a desktop computer, a server, etc.). Examples of such computing devices and components of such computing devices are shown in and described below in connection with Figures 5A, 5B, and 5C. In some embodiments, blocks of process 450 may be executed in an order other than what is shown in Figure 4B. In some implementations, one or more blocks of process 450 may be omitted. In some implementations, two or more blocks of process 450 may be performed in parallel.

Process 450 can begin at 452 and determine a set of candidate source files and a target file. The set of candidate source files may be a first stage subset of candidate source files, e.g., that are the result of filtering a larger superset of candidate source files using metadata (e.g., an EDL). The target file may be a segmented clip (e.g., a result of a segmentation block, such as segmentation block 104 of Figure 1). The candidate source files and the target file may include video content, audio content, and/or text content.

Note that blocks 454 - 460, described below in more detail, may be performed in a loop in a hierarchical manner as described above in connection with Figure 3. For example, blocks 454-460 may be performed once based on visual components associated with the target file, and, if no matching source items are identified with confidence exceeding a visual similarity threshold, blocks 454 - 460 may be repeated with audio components. Continuing with this example, blocks 454 - 460 may be subsequently repeated with text components if no matching source files are identified with confidence exceeding an audio similarity threshold. With respect to blocks 454 - 460 in the discussion below, embeddings, uncertainties, and/or hash codes are with respect to a particular type of component (e.g., video, audio, or text).

At 454, process 400 can generate an embedding associated with the target file and an associated uncertainty. For example, the embedding associated with the target file may be generated by a pre-trained encoder network, such as encoder 402. The uncertainty associated with the embedding may be generated by a trained uncertainty layer network, such as uncertainty layer 404.

At 456, process 450 can generate a hash code corresponding to the embedding associated with the target file. The hash code may be generated by a hash code layer (e.g., hash code layer 406 of Figure 4A). In some embodiments, the hash code may be generated using the embedding and the uncertainty associated with the embedding generated at block 454. Although Figure 4A describes use of a data-dependent hash code that is generated by a neural network trained in a supervised manner, in some implementations, a hash code may be a data dependent hash code generated by a model trained in either an unsupervised or semi-supervised manner, or, may be a data-independent hash code.

At 458, process 450 can identify a subset of the set of candidate source files based on a comparison of the hash code corresponding to the target file and hash codes associated with each candidate source file of the set of candidate source files. The subset generated at block 458 is sometimes referred to herein as a "second stage subset," because the second stage subset is generated after an initial first stage subset is generated using the metadata.

At 460, process 450 can identify one or more matching source files based on a comparison of embeddings of the candidate source files in the subset (e.g., the second stage subset) and the embedding associated with the target file. Note that, in some implementations, process 450 may additionally use the uncertainties associated with each embedding to identify the one or more matching source files. For example, the uncertainties may be used to determine a confidence level associated with each identified source file. The confidence level may be used to determine whether to proceed to a next hierarchical level of similarity-checking as shown in and described above in connection with Figure 3.

Figure 5A is a block diagram that shows examples of components of an apparatus capable of implementing various aspects of this disclosure. As with other figures provided herein, the types and numbers of elements shown in Figure 5A are merely provided by way of example. Other implementations may include more, fewer and/or different types and numbers of elements. According to some examples, the apparatus 500 may be configured for performing at least some of the methods disclosed herein. In some implementations, the apparatus 500 may be, or may include, a television, one or more components of an audio system, a mobile device (such as a cellular telephone), a laptop computer, a tablet device, a smart speaker, or another type of device.

According to some alternative implementations the apparatus 500 may be, or may include, a server. In some such examples, the apparatus 500 may be, or may include, an encoder. Accordingly, in some instances the apparatus 500 may be a device that is configured for use within an audio environment, such as a home audio environment, whereas in other instances the apparatus 500 may be a device that is configured for use in "the cloud," e.g., a server.

In this example, the apparatus 500 includes an interface system 505 and a control system 510. The interface system 505 may, in some implementations, be configured for communication with one or more other devices of an audio environment. The audio environment may, in some examples, be a home audio environment. In other examples, the audio environment may be another type of environment, such as an office environment, an automobile environment, a train environment, a street or sidewalk environment, a park environment, etc. The interface system 505 may, in some implementations, be configured for exchanging control information and associated data with audio devices of the audio environment. The control information and associated data may, in some examples, pertain to one or more software applications that the apparatus 500 is executing.

The interface system 505 may, in some implementations, be configured for receiving, or for providing, a content stream. The content stream may include audio data. The audio data may include, but may not be limited to, audio signals. In some instances, the audio data may include spatial data, such as channel data and/or spatial metadata. In some examples, the content stream may include video data and audio data corresponding to the video data.

The interface system 505 may include one or more network interfaces and/or one or more external device interfaces (such as one or more universal serial bus (USB) interfaces). According to some implementations, the interface system 505 may include one or more wireless interfaces. The interface system 505 may include one or more devices for implementing a user interface, such as one or more microphones, one or more speakers, a display system, a touch sensor system and/or a gesture sensor system. In some examples, the interface system 505 may include one or more interfaces between the control system 510 and a memory system, such as the optional memory system 515 shown in Figure 5. However, the control system 510 may include a memory system in some instances. The interface system 505 may, in some implementations, be configured for receiving input from one or more microphones in an environment.

The control system 510 may, for example, include a general purpose single- or multi-chip processor, a digital signal processor (DSP), an application specific integrated circuit (ASIC), a field programmable gate array (FPGA) or other programmable logic device, discrete gate or transistor logic, and/or discrete hardware components.

In some implementations, the control system 510 may reside in more than one device. For example, in some implementations a portion of the control system 510 may reside in a device within one of the environments depicted herein and another portion of the control system 510 may reside in a device that is outside the environment, such as a server, a mobile device (e.g., a smartphone or a tablet computer), etc. In other examples, a portion of the control system 510 may reside in a device within one environment and another portion of the control system 510 may reside in one or more other devices of the environment. For example, a portion of the control system 510 may reside in a device that is implementing a cloud-based service, such as a server, and another portion of the control system 510 may reside in another device that is implementing the cloud-based service, such as another server, a memory device, etc. The interface system 505 also may, in some examples, reside in more than one device. In some implementations, a portion of a control system may reside in or on an earbud.

In some implementations, the control system 510 may be configured for performing, at least in part, the methods disclosed herein. According to some examples, the control system 510 may be configured for implementing methods of segmenting a multimedia file, determining embeddings and/or hash codes, determining similarity metrics, identifying one or more source files, or the like.

Some or all of the methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. The one or more non-transitory media may, for example, reside in the optional memory system 515 shown in Figure 5 and/or in the control system 510. Accordingly, various innovative aspects of the subject matter described in this disclosure can be implemented in one or more non-transitory media having software stored thereon. The software may, for example, be executable by one or more components of a control system such as the control system 510 of Figure 5.

In some examples, the apparatus 500 may include the optional microphone system 520 shown in Figure 5. The optional microphone system 520 may include one or more microphones. In some implementations, one or more of the microphones may be part of, or associated with, another device, such as a speaker of the speaker system, a smart audio device, etc. In some examples, the apparatus 500 may not include a microphone system 520. However, in some such implementations the apparatus 500 may nonetheless be configured to receive microphone data for one or more microphones in an audio environment via the interface system 510. In some such implementations, a cloud-based implementation of the apparatus 500 may be configured to receive microphone data, or a noise metric corresponding at least in part to the microphone data, from one or more microphones in an audio environment via the interface system 510.

According to some implementations, the apparatus 500 may include the optional loudspeaker system 525 shown in Figure 5. The optional loudspeaker system 525 may include one or more loudspeakers, which also may be referred to herein as "speakers" or, more generally, as "audio reproduction transducers." In some examples (e.g., cloud-based implementations), the apparatus 500 may not include a loudspeaker system 525. In some implementations, the apparatus 500 may include headphones. Headphones may be connected or coupled to the apparatus 500 via a headphone jack or via a wireless connection (e.g., BLUETOOTH).

Some aspects of present disclosure include a system or device configured (e.g., programmed) to perform one or more examples of the disclosed methods, and a tangible computer readable medium (e.g., a disc) which stores code for implementing one or more examples of the disclosed methods or steps thereof. For example, some disclosed systems can be or include a programmable general purpose processor, digital signal processor, or microprocessor, programmed with software or firmware and/or otherwise configured to perform any of a variety of operations on data, including an embodiment of disclosed methods or steps thereof. Such a general purpose processor may be or include a computer system including an input device, a memory, and a processing subsystem that is programmed (and/or otherwise configured) to perform one or more examples of the disclosed methods (or steps thereof) in response to data asserted thereto.

Some embodiments may be implemented as a configurable (e.g., programmable) digital signal processor (DSP) that is configured (e.g., programmed and otherwise configured) to perform required processing on audio signal(s), including performance of one or more examples of the disclosed methods. Alternatively, embodiments of the disclosed systems (or elements thereof) may be implemented as a general purpose processor (e.g., a personal computer (PC) or other computer system or microprocessor, which may include an input device and a memory) which is programmed with software or firmware and/or otherwise configured to perform any of a variety of operations including one or more examples of the disclosed methods. Alternatively, elements of some embodiments of the inventive system are implemented as a general purpose processor or DSP configured (e.g., programmed) to perform one or more examples of the disclosed methods, and the system also includes other elements (e.g., one or more loudspeakers and/or one or more microphones). A general purpose processor configured to perform one or more examples of the disclosed methods may be coupled to an input device (e.g., a mouse and/or a keyboard), a memory, and a display device.

Another aspect of present disclosure is a computer readable medium (for example, a disc or other tangible storage medium) which stores code for performing (e.g., coder executable to perform) one or more examples of the disclosed methods or steps thereof.

Figure 5B illustrates a schematic block diagram of an example device architecture 501 (in this example, an apparatus 501) that may be used to implement various aspects of the present disclosure. The apparatus 501 of Figure 5B is an instance of the apparatus 500 of Figure 5A. Architecture 501 includes but is not limited to servers and client devices, systems, etc., which may be configured to perform the methods that are described with reference to any or all of Figures 2, 3, and/or 4B. As shown, the architecture 501 includes central processing unit (CPU) 541, which is capable of performing various processes in accordance with a program stored in, for example, read only memory (ROM) 542 or a program loaded from, for example, storage unit 548 to random access memory (RAM) 543. The CPU 541 may be, for example, an electronic processor 541. In these examples, the CPU 541 is an instance of the control system 510 of Figure 5A and the ROM 542 and RAM 543 are instances of the memory system 515. In RAM 543, the data required when CPU 541 performs the various processes is also stored, as required. CPU 541, ROM 542, and RAM 543 are connected to one another via bus 544. Input/output (I/O) interface 545 is also connected to bus 544. The bus 544 and the I/O) interface 545 are instances of the interface system 505 of Figure 5A.

The following components are connected to I/O interface 545: input unit 546, that may include a keyboard, a mouse, or the like; output unit 547 that may include a display such as a liquid crystal display (LCD) and one or more speakers; storage unit 548 including a hard disk, or another suitable storage device; and communication unit 549 including a network interface card such as a network card (e.g., wired or wireless).

In some implementations, input unit 546 includes one or more microphones in different positions (depending on the host device) enabling capture of audio signals in various formats (e.g., mono, stereo, spatial, immersive, and other suitable formats).

In some implementations, output unit 547 include systems with various number of speakers. Output unit 547 (depending on the capabilities of the host device) can render audio signals in various formats (e.g., mono, stereo, immersive, binaural, and other suitable formats).

In some embodiments, communication unit 549 is configured to communicate with other devices (e.g., via a network). Drive 550 is also connected to I/O interface 545, as required. Removable medium 551, such as a magnetic disk, an optical disk, a magneto-optical disk, a flash drive or another suitable removable medium is mounted on drive 550, so that a computer program read therefrom is installed into storage unit 548, as required. A person skilled in the art would understand that although apparatus 501 is described as including the above-described components, in real applications, it is possible to add, remove, and/or replace some of these components and all these modifications or alteration all fall within the scope of the present disclosure.

In accordance with example embodiments of the present disclosure, the processes described above may be implemented as computer software programs or on a computer-readable storage medium. For example, embodiments of the present disclosure include a computer program product including a computer program tangibly embodied on a machine readable medium, the computer program including program code for performing methods. In such embodiments, the computer program may be downloaded and mounted from the network via the communication unit 549, and/or installed from the removable medium 551, as shown in Figure 5B.

Figure 5C illustrates a schematic block diagram of an example CPU 541 implemented in the device architecture 501 of Figure 5B that may be used to implement various aspects of the present disclosure. The CPU 541 includes an electronic processor 560 and a memory 561. The electronic processor 560 is electrically and/or communicatively connected to the memory 561 for bidirectional communication. The memory 561 stores encoding software 562 and source-file identification software 563. The memory 561 may be, for example, a ROM, a RAM, or another non-transitory computer readable medium. The electronic processor 560 may implement the software 563 stored in the memory 561 to perform, among other things, techniques for source-file identification. For example, software 563 may perform any of the operations discussed above in connection with Figures 2, 3, and/or 4B.

Generally, various example embodiments of the present disclosure may be implemented in hardware or special purpose circuits (e.g., control circuitry), software, logic or any combination thereof. For example, the units discussed above can be executed by control circuitry (e.g., CPU 541 in combination with other components of Figure 5B), thus, the control circuitry may be performing the actions described in this disclosure. Some aspects may be implemented in hardware, while other aspects may be implemented in firmware or software which may be executed by a controller, microprocessor or other computing device (e.g., control circuitry). While various aspects of the example embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Additionally, various blocks shown in the flowcharts may be viewed as method steps, and/or as operations that result from operation of computer program code, and/or as a plurality of coupled logic circuit elements constructed to carry out the associated function(s). For example, embodiments of the present disclosure include a computer program product including a computer program tangibly embodied on a machine readable medium, the computer program containing program codes configured to carry out the methods as described above.

In the context of the disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may be non-transitory and may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Computer program code for carrying out methods of the present disclosure may be written in any combination of one or more programming languages. These computer program codes may be provided to a processor of a general-purpose computer, special purpose computer, or other programmable data processing apparatus that has control circuitry, such that the program codes, when executed by the processor of the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server or distributed over one or more remote computers and/or servers.

While specific embodiments of the present disclosure and applications of the disclosure have been described herein, it will be apparent to those of ordinary skill in the art that many variations on the embodiments and applications described herein are possible without departing from the scope of the disclosure described and claimed herein. It should be understood that while certain forms of the disclosure have been shown and described, the disclosure is not to be limited to the specific embodiments described and shown or the specific methods described.

## Claims

1. A method of identifying source files, the method comprising:
receiving a target file;
identifying, from a set of candidate source files, a subset of candidate source files by filtering the set of candidate source files based on metadata associated with each candidate source file; and
identifying a matching source file of the subset of candidate source files based on similarities of embeddings of candidate source files of the subset of candidate source files to embeddings associated with the target file.

2. The method of claim 1, wherein the metadata associated with each candidate source file is stored in an edit decision list (EDL) file.

3. The method of claim 1 or 2, wherein the target file has a size of at least 30 GB.

4. The method of any one of claims 1-3, wherein identifying the matching source file of the subset of candidate source files comprises performing a hierarchical sequence of similarity comparisons between the target file and each candidate source file in the subset.

5. The method of claim 4, wherein the target file comprises a video file, and wherein the hierarchical sequence comprises:
determining similarities between video components of the target file and video components associated with each candidate source file in the subset; and
responsive to determining each similarity of video components is below a video similarity threshold, determining similarities between audio components of the target file and audio components associated with each candidate source file.

6. The method of claim 5, further comprising responsive to determining each similarity of audio components is below an audio similarity threshold, determining similarities between text components of the target multimedia file and text components associated with each candidate source file.

7. The method of claim 6, wherein the text components comprise captions or subtitles.

8. The method of any one of claims 1-7, wherein the subset of candidate source files is a first stage subset of candidate source files, and wherein identifying the matching source file comprises:
determining a target embedding associated with the target file;
determining a target hash code associated with the target embedding; and
identifying a second stage subset of candidate source files, the second stage subset of candidate source files being a subset of the first stage subset of candidate source files, based on a comparison of the target hash code to hash codes associated with each of the candidate source files of the first stage subset of candidate source files, wherein the matching source file is identified from the second stage subset of candidate source files.

9. The method of claim 8, wherein the matching source file is identified by comparing embeddings associated with candidate source files of the second stage subset of candidate source files and the target embedding.

10. The method of claim 8 or 9, wherein the target hash code and each of the hash codes associated with each of the candidate source files of the first stage subset of candidate source files are associated with an uncertainty, and wherein the uncertainty of each hash code is used in identifying the second stage subset of candidate source files.

11. The method of any one of claims 8-10, wherein the target hash code is generated using a trained neural network configured to take, as input, the target embedding, and generate, as output, the target hash code.

12. The method of claim 11, wherein the neural network is further configured to take, as input, an uncertainty associated with the target embedding, and utilize the uncertainty to generate the target hash code.

13. The method of claim 11 or 12, wherein the neural network is trained in a supervised manner using a training set comprising pairs of embeddings including similar pairs and dissimilar pairs.

14. The method of any one of claims 1-13, wherein the embeddings associated with each of the candidate source files and with the target multimedia file are each associated with an uncertainty, and wherein the uncertainty of each embedding is utilized in comparing the embeddings to identify the matching source file.

15. A system comprising:
one or more processors; and
a non-transitory computer-readable medium storing instructions that, upon execution by the one or more processors, cause the one or more processors to perform any of the operations of claims 1-14.
